# EUROPÄISCHE PATENTSCHRIFT

(11) **EP 4 211 371 B1**
(45) Veröffentlichungstag und Bekanntmachung des Hinweises auf die Patenterteilung: **23.04.2025**
(21) Anmeldenummer: 21739102.8
(22) Anmeldetag: 01.07.2021
(51) Int. Cl.: F16H 63/34, F16H 63/18

(54) **PARKSPERRE FÜR FAHRZEUGE**
PARKING LOCK FOR VEHICLES
VERROU DE STATIONNEMENT POUR VÉHICULES

(30) Priorität: 09.09.2020 DE 102020211293
(43) Veröffentlichungstag der Anmeldung: 19.07.2023
(73) Patentinhaber: Robert Bosch GmbH, 70442 Stuttgart (DE)
(72) Erfinder: GERUNDT, Oliver, 71292 Friolzheim (DE); FEIGL, Markus, 71706 Markgroeningen (DE); SCHWARTZ, Daniel, 71701 Schwieberdingen (DE)
(86) Internationale Anmeldenummer: PCT/EP2021/068157
(87) Internationale Veröffentlichungsnummer: WO 2022/053196

(56) Entgegenhaltungen:
- EP-B1- 2 410 214
- DE-A1- 102015 206 157
- US-A1- 2020 166 131

## Beschreibung

### Technisches Gebiet

Die Erfindung bezieht sich auf eine Parksperre für Fahrzeuge, wobei die Parksperre ein Sperrrad und eine mit diesem zusammenwirkende Klinke umfasst, die mittels eines Aktuators über eine Aktuatorwelle betätigt ist. Des Weiteren bezieht sich die Erfindung auf ein E-Achsen-Modul eines elektrisch angetriebenen Fahrzeugs mit einer solchen Parksperre.

### Stand der Technik

DE 101 43 386 B4 betrifft eine Parksperre für ein Kraftfahrzeug mit einem Antriebsstrang, umfassend eine mit den Antriebsrädern in Wirkverbindung stehende Antriebswelle mit einem formschlüssig arretierbaren Eingriffsrad. Ferner liegt ein elastisches Federelement vor, welches bei einer Arretierung des Eingriffsrads in Folge einer Relativverdrehung des Eingriffsrads und einem drehfest an der Antriebswelle angeordneten Flansch eine Rotationsenergie des Antriebsstrangs aufnimmt.

In elektrisch angetriebenen Kraftfahrzeugen sind die Getriebeeingangswelle und das Klinkenrad der Parksperre fest mit dem Rotor der elektrischen Maschine verbunden. Durch geeignete Mittel soll im Fall eines abrupten Einlegens der Parksperre die Rotationsenergie des Rotors abgebaut werden.

Zur Drehmitnahme steht das Eingriffsrad mit einem an der Antriebswelle drehfest angeordneten Flansch in Wirkverbindung, wobei an den beiden Elementenden wechselseitig angeordnete Formschlussprofile ausgeführt sind, zwischen denen mindestens ein elastisches Federelement angeordnet ist. Insbesondere sind die Formschlussprofile als Radialverzahnung ausgebildet. Im Querschnitt U-förmige Kammern ergeben sich, in die die elastischen Federelemente mit einem gleichfalls im Wesentlichen U-förmigen Querschnitt eingelagert sind. Als Werkstoff für das elastische Federelement ist ein Elastomer, insbesondere mit der Bezeichnung HNBR bevorzugt.

An dem Flansch sind zum Beispiel eine Anzahl radial nach außen verlaufender Stege ausgebildet und an einem Eingriffsrad als Klinkenrad ist die gleiche Anzahl, jedoch nach radial innen verlaufender Stege vorhanden. Das Federelement kann zum Beispiel mittels eines Spritzverfahrens hergestellt werden und wird bei einer Relativbewegung von Klinkenrad und Flansch verformt und nimmt Restrotationsenergie des Antriebsstrangs federelastisch auf. Um die Formänderung aufzunehmen, sind angrenzend an die Federelemente in Richtung des Flansches und des Klinkenrades verschiedene Hohlräume vorgesehen.

EP 2 410 214 B1 bezieht sich auf einen Sperrmechanismus zum drehfesten Arretieren einer Welle, der insbesondere in Parksperren in Elektrofahrzeugen zum Einsatz kommt. Es soll ein Sperrmechanismus dargestellt werden, der hohe Belastungen aufnehmen kann und gleichzeitig kostengünstig herstellbar ist sowie eine kompakte Bauform aufweist. Die offenbarte Parksperre umfasst ein Klinkenrad, welches direkt oder indirekt über ein Dämpfungselement, beispielsweise ein Kunststoffteil, eine Torsionsfeder oder ähnliches zur Dämpfung von Spitzenbelastungen mit der Zwischenwelle verbunden ist.

Aus der US 2020/166131 A1 und der DE 10 2025 206 157 A1 sind Parksperren für Fahrzeuge bekannt, welche ein Sperrrad und eine mit diesem zusammenwirkende Klinke umfassen, die mittels eines Aktuators über eine Aktuatorwelle betätigbar ist.

### Offenbarung der Erfindung

Es wird eine Parksperre für Fahrzeuge nach Anspruch 1 vorgeschlagen, wobei die Parksperre ein Sperrrad und eine mit diesem zusammenwirkende Klinke umfasst, die mittels eines Aktuators über eine Aktuatorwelle betätigt ist. Bei Betätigung der Klinke bei Einlegen ihrer Verriegelungsposition und Einlegen ihrer Freigabeposition des Sperrrads, was einer Freigabe des Sperrrads entspricht, wird der Aktuator in dieselbe Rotationsrichtung angetrieben, wobei die Aktuatorwelle eine Welle antreibt, die in einem 90°-Versatz zur Aktuatorwelle verläuft und die eine Nut am Umfang der Welle aufweist, in der mindestens ein Gleitstein oder eine Rolle eines Schiebestücks geführt wird, wobei das Schiebestück eine Verdrehsicherung aufweist und sich bei einer rotatorischen Bewegung der Welle in eine Translationsrichtung parallel zur Drehachse der Welle bewegt und das Schiebestück wirkverbunden mit der Klinke ist. Erfindungsgemäß erstreckt sich die Nut in der Welle mäander- oder gewindegangförmig in einem Umfangswinkel von 720°, zwei vollständigen Umdrehungen der Welle entsprechend.

Durch die erfindungsgemäße Ausbildung der Parksperre wird erreicht, dass die Anzahl der beweglichen Teile der erfindungsgemäß vorgeschlagenen Parksperre stark reduziert wird. Des Weiteren kann durch die erfindungsgemäß vorgeschlagene Auslegung der Parksperre eine extrem schnelle Einlegegeschwindigkeit erreicht werden. Schließlich ist zu erwähnen, dass der Aktuator, der die Parksperre antreibt, lediglich in eine Richtung antreibt, da sowohl zum Einlegen als auch zum Entsperren der erfindungsgemäß vorgeschlagenen Parksperre, weiter in eine Richtung angetrieben ist, was den Aktuator kostengünstiger durch die Einsparung von Teilen macht.

Erfindungsgemäß treibt die Aktuatorwelle des Aktuators eine Welle an, die in einem 90°-Versatz zur Aktuatorwelle verläuft und die des Weiteren eine Nut aufweist, in der eine Gleitschiene oder eine Rolle eines Schiebestücks geführt ist. Durch den 90°-Versatz zwischen der Welle und der Aktuatorwelle kann eine Selbsthemmung der erfindungsgemäß vorgeschlagenen Parksperre erreicht werden, falls die Spannungsversorgung eines elektrisch angetriebenen Aktuators unterbrochen sein sollte.

Die in die Welle eingearbeitete Nut erstreckt sich mäander- oder gewindegangförmig in einem Umfangswinkel von 720° entlang der Welle, welches zwei vollständigen Umdrehungen der Welle entspricht. Dies trägt zu einer Erhöhung der Einlegegeschwindigkeit bei; ferner kann eine sehr schnelle Ausrückbewegung erreicht werden, was der 720°-Umfangserstreckung der Nut in der Welle geschuldet ist.

Das Schiebestück weist eine Verdrehsicherung auf und bewegt sich bei einer rotatorischen Bewegung der Welle in Translationsrichtung parallel zur Drehachse der Welle. Durch das Schiebestück wird die rotatorische Bewegung der Welle in eine Translationsrichtung des Schiebestücks parallel zur Drehachse der Welle bewegt, wodurch in einfacher Weise ein Rollwagen der Parksperre, der mit einer Rampe der Klinke zusammenwirkt, eine translatorische Bewegung erfährt, die eine Schwenkbewegung der Klinke um eine Achse bewirkt.

Weitere vorteilhafte Ausgestaltungen der Erfindung ergeben sich aus den abhängigen Ansprüchen.

In weiterer vorteilhafter Ausgestaltung der erfindungsgemäß vorgeschlagenen Parksperre ist der Rollwagen in einer Führung geführt und umfasst mindestens einen Rollkörper. Durch diese Ausführungsmöglichkeit der erfindungsgemäß vorgeschlagenen Parksperre ist eine sichere Führung und damit eine sichere Betätigung der Parksperre über den geführten Rollwagen erreichbar.

In weiterer vorteilhafter Ausgestaltung der erfindungsgemäß vorgeschlagenen Parksperre ist die Klinke, die mit dem Sperrrad zusammenwirkt, so ausgebildet, dass diese um eine Klinkenachse verschwenkbar ist.

In weiterer vorteilhafter Ausgestaltung der erfindungsgemäß vorgeschlagenen Parksperre weist die Klinke eine Rampenfläche auf, die auf dem mindestens einen Rollkörper des Rollwagens aufliegt. Durch eine translatorische Bewegung des Rollwagens, die aus einer Rotationsbewegung hervorgeht, resultiert die Bewegung der Rampenfläche, die sich in besonders vorteilhafter Weise an der Unterseite der um ihre Klinkenachse bewegbaren Klinke befindet.

In weiterer vorteilhafter Ausgestaltung der erfindungsgemäß vorgeschlagenen Parksperre ist zwischen dem Rollwagen und dem Schiebestück eine die Welle umgebende Feder aufgenommen. Die Feder ist bevorzugt als Druckfeder ausgeführt und liegt mit einer Seite an einem Bund am Rollwagen und mit einer anderen Seite am Schiebestück an und hält diese in Distanz zueinander.

In weiterer vorteilhafter Ausgestaltung der erfindungsgemäß vorgeschlagenen Parksperre ist die Aktuatorwelle mit einer Schnecke versehen, die mit einem Schneckenrad der Welle kämmt, die in Bezug auf die Aktuatorwelle zu dieser einen 90°-Versatz aufweist.

Die Erfindung bezieht sich darüber hinaus ein E-Achsen-Modul eines elektrisch angetriebenen Fahrzeugs mit einer solchen Parksperre.

### Vorteile der Erfindung

Die erfindungsgemäß vorgeschlagene Parksperre zeichnet sich dadurch aus, dass im Vergleich zu aus dem Stand der Technik bekannten Parksperrenlösungen die Anzahl der beweglichen Teile stark reduziert ist. Die Ausführung der Mechanik lässt eine extrem schnelle Einlegegeschwindigkeit der erfindungsgemäß vorgeschlagenen Parksperre zu.

In besonders vorteilhafter Weise ist der Aktuator lediglich in eine Richtung anzutreiben, so dass zum Einlegen der Parksperre und zum Entsperren der Parksperre lediglich eine Rotationsrichtung des Aktuators erforderlich ist. Dies erlaubt eine erheblich kostengünstigere Auslegung des Aktuators durch Einsparung von Teilen, da nur eine Antriebsrichtung sicherzustellen ist.

Die erfindungsgemäß vorgeschlagene Lösung erlaubt aufgrund der erreichbaren hohen Einlegegeschwindigkeit der erfindungsgemäß vorgeschlagenen Parksperre sehr kurze Schaltzeiten.

Die vorteilhafte Ausgestaltung aus Schnecke und Schneckenrad, die an der erfindungsgemäß vorgeschlagenen Parksperre in einem 90°-Wellenversatz in Bezug aufeinander angeordnet sind, können zwei grundlegende Ausführungsvarianten dargestellt werden. Bei einer ersten Ausführungsvariante, bei selbsthemmend ausgelegter Schnecke, sperrt diese im Fehlerfall, so zum Beispiel bei einem elektrischen Ausfall des Aktuators das Parksperrensystem. Dies bedeutet, dass die Sperrklinke im Sperrrad verbleibt und das Fahrzeug nicht unkontrolliert wegrollen kann. Voraussetzung für diese Variante ist ein Aktuator, der sich in eine Drehrichtung im Uhrzeigersinn und in eine Drehrichtung gegen den Uhrzeigersinn verdrehen lässt. Dies ist unabhängig von der Antriebsrichtung des eingesetzten Aktuators.

Bei einer zweiten Ausführungsvariante, d. h. bei einer nicht selbsthemmend ausgelegten Schnecke, wird im Fehlerfall beispielsweise bei einem elektrischen Ausfall des Aktuators, bedingt durch die Federkraft, die auf das Gesamtsystem wirkt, dieses zurückgeschoben und die Sperrklinke gibt das Sperrrad frei, so dass zumindest eine Bewegung des Fahrzeugs wieder möglich ist.

### Kurze Beschreibung der Zeichnungen

Ausführungsformen der Erfindung werden anhand der Zeichnungen und der nachfolgenden Beschreibung näher erläutert.

Es zeigen:
- Figur 1: eine Ausführungsvariante einer Parksperre,
- Figur 2: eine schematische Darstellung des Aufbaus der erfindungsgemäß vorgeschlagenen Parksperre,
- Figur 3: eine Seitenansicht der erfindungsgemäß vorgeschlagenen Parksperre gemäß Figur 2,
- Figur 4: eine perspektivische Darstellung der erfindungsgemäß vorgeschlagenen Parksperre mit Translations- und Rotationsrichtungen der beteiligten Komponenten,
- Figur 5: eine Ansicht der erfindungsgemäß vorgeschlagenen Parksperre in 1-Uhr-Postion der Aktuatorwelle,
- Figur 6: eine perspektivische Ansicht der erfindungsgemäß vorgeschlagenen Parksperre in 5-Uhr-Position der Aktuatorwelle,
- Figur 7: eine Darstellung der erfindungsgemäß vorgeschlagenen Parksperre in 8-Uhr-Position der Aktuatorwelle und
- Figur 8: die 1-Uhr-Position der Aktuatorwelle nach deren vollständiger Umdrehung im Uhrzeigersinn.

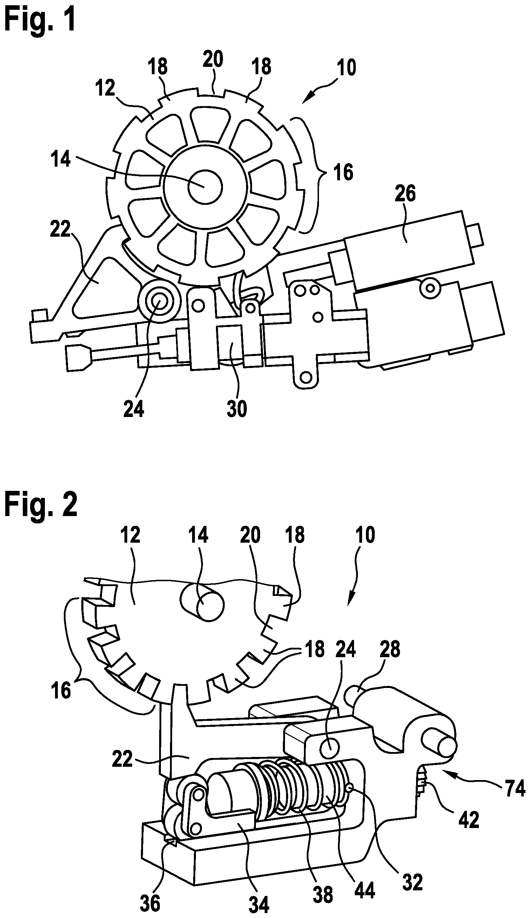

Figur 1 ist eine Parksperre 10 zu entnehmen, die ein Sperrrad 12 aufweist, welches drehfest auf einer Antriebswelle 14 aufgenommen ist. Das Sperrrad 12 weist eine Verzahnung 16 auf, die einzelne Zähne 18 umfasst, die in Umfangsrichtung durch Zahnlücken 20 voneinander getrennt sind. Dem Sperrrad 12 ist eine Klinke 22 zugeordnet, die um eine Klinkenachse 24 drehbar ist. Die Parksperre 10 gemäß Figur 1 wird über einen Aktuator 26 betätigt. Die Parksperre 10 weist einen Zahnstangenmechanismus auf, mit welchem die Schwenkbewegung der Klinke 22 initiiert wird.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Figur 2 zeigt eine perspektivische Ansicht der wesentlichen Komponenten der erfindungsgemäß vorgeschlagenen Parksperre 10.

Wie Figur 2 zeigt, ist das Sperrrad 12 der Parksperre 10 auf der Antriebswelle 14 drehfest aufgenommen. Am Umfang des Sperrrads 12, welches aus einem metallischen Material, aus einem Kunststoffmaterial oder als Hybridbauteil gefertigt ist, befindet sich die Verzahnung 16, die eine Anzahl von Zähnen 18 aufweist, die in Umfangsrichtung durch einzelne Zahnlücken 20 voneinander getrennt sind. Unterhalb des Sperrrads 12 der Parksperre 10 befindet sich gemäß der Darstellung in Figur 2 die Klinke 22, die um die Klinkenachse 24 verschwenkbar ist. Die Parksperre 10 umfasst darüber hinaus eine hier nur teilweise dargestellte Aktuatorwelle 28, die von einem Aktuator 26, wie beispielsweise in Figur 1 dargestellt ist, angetrieben ist. Bei dem Aktuator 26 kann es sich beispielsweise um einen elektrischen Antrieb handeln. Dieser treibt die Aktuatorwelle 28 an, die eine in Figur 2 nicht dargestellte Schnecke 40 umfasst. Diese kämmt mit einem in Figur 2 nur teilweise dargestellten Schneckenrad 42, welches an einer Stirnseite einer Welle 44 befestigt ist. Auf dieser Welle 44 befindet sich - hier verdeckt - eine Verdrehsicherung 32 eines Schiebestücks 30.

Die Welle 44 ist mit einem Rollwagen 34 verbunden. Der Rollwagen 34 umfasst mindestens einen Rollkörper 98. Der Rollkörper 98 wirkt mit einer Rampenfläche 100 der Klinke 22 zusammen, während ein weiterer Rollkörper 98 des Rollwagens 34 in einer Führung 36 des Gehäuses der Parksperre 10 geführt ist.

Wie aus der perspektivischen Darstellung der Parksperre 10 gemäß Figur 2 weiter hervorgeht, sind sowohl die Welle 44 als auch Teile des Rollwagens 34 von einer Feder 38 umschlossen. Diese stützt sich mit einer Stirnseite an einem Bund des Rollwagens 34 und mit ihrer gegenüberliegenden Stirnseite an einer Stirnseite des Schiebestücks 30 mit Verdrehsicherung 32 ab.

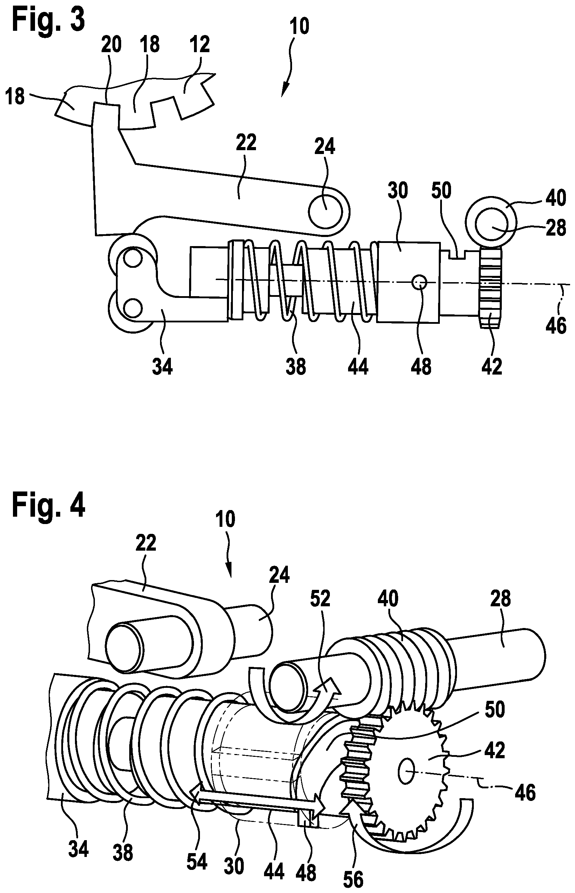

Figur 3 zeigt eine Seitenansicht der erfindungsgemäß vorgeschlagenen Parksperre 10. Aus Figur 3 geht hervor, dass auf dem Umfang der Welle 44 das Schiebestück 30 aufgenommen ist. An dessen Innenumfangsfläche befindet sich eine Rolle oder ein Gleitstein 48 oder dergleichen, der innerhalb einer Nut 50 läuft. Diese Nut erstreckt sich am Umfang der Welle 44 mäanderförmig oder in Form eines Gewindeganges um einen Umfangswinkel von 720°, der im Wesentlichen zwei vollen Umdrehungen der Welle 44 entspricht. Aus Figur 3 geht des Weiteren hervor, dass die Feder 38 - ausgeführt als Druckfeder - sich einerseits mit einer Seite am Schiebestück 30 und mit ihrer gegenüberliegenden Seite an einem Bund des Rollwagens 34 abstützt. Die Welle 44 rotiert um ihre Drehachse 46 und weist an einer Stirnseite das Schneckenrad 42 auf, welches durch die Schnecke 40 der Aktuatorwelle 28 angetrieben ist. Wie Figur 3 zeigt, ist die Welle 44 in einem 90°-Wellenversatz 74 in Bezug auf die Aktuatorwelle 28 angeordnet. Aus der Darstellung gemäß Figur 3 geht hervor, dass die Klinke 22 mit ihrem Klinkenzahn in eine Zahnlücke 20 zwischen zwei Zähnen 18 des hier nicht näher dargestellten Sperrrades 12 eingefahren ist, dessen Rotation mithin in Umfangsrichtung blockiert ist.

Figur 4 zeigt eine perspektivische Ansicht der erfindungsgemäß vorgeschlagenen Parksperre von deren Antriebsseite her.

Die Klinke 22 - in Figur 4 nur teilweise dargestellt - ist um die Klinkenachse 24 der Parksperre 10 verschwenkbar. Das am Umfang der Welle 44 angeordnete Schiebestück 30 ist in Translationsrichtung 54 entsprechend dem Doppelpfeil bewegbar. An der Innenumfangsfläche des Schiebestücks 30 befindet sich der Gleitstein 48 oder die Rolle, die in der Nut 50 am Umfang der Welle 44 geführt ist. Die Aktuatorwelle 28 ist durch den in Figur 4 nicht näher dargestellten Aktuator 26 in die Rotationsrichtung 52 entsprechend dem Uhrzeigersinn angetrieben. Dadurch wird das mit der Schnecke 40 der Aktuatorwelle 28 kämmende Schneckenrad 42 an der Stirnseite der Welle 44 um deren Drehachse 46 im Uhrzeigersinn angetrieben. Aufgrund der Verdrehsicherung 32 des Schiebestücks 30 wandelt dieses die Drehbewegung der Welle 44 um die Drehachse 46 in eine Bewegung in Translationsrichtung 54 um. Der Bewegungsspielraum des Rollwagens 34 entspricht mithin dem Grad, in welchem das Schiebestück 30 am Umfang der Welle 44 in Translationsrichtung 54 bewegt wird.

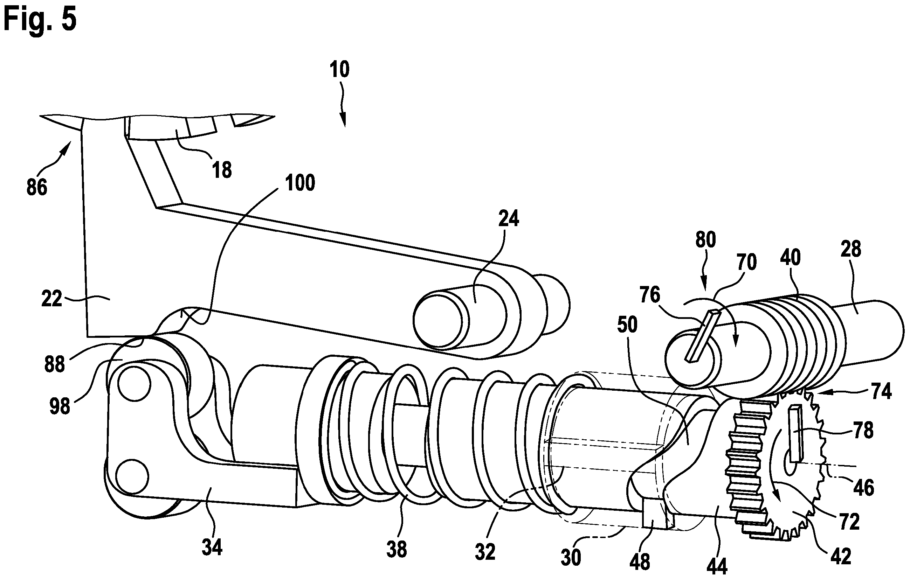

Der Figurensequenz der Figuren 5, 6, 7 und 8 sind verschiedene Positionen, nämlich eine 1-Uhr-Position 80 eines Zeigers 76 an der Aktuatorwelle 28, die 5-Uhr-Position 82 des Zeigers 76, die 8-Uhr-Position 84 des Zeigers 76 und die nach einer vollen Umdrehung im Uhrzeigersinn 70 der Aktuatorwelle 28 wieder erreichte 1-Uhr-Position 80 des Zeigers 76 der Aktuatorwelle 28 im Einzelnen zu entnehmen.

In Figur 5 erfolgt bei einem Antrieb der Aktuatorwelle 28 deren Verdrehung - hier dargestellt anhand des Zeigers 76 - im Uhrzeigersinn 70. Ein Zeiger 78 an der Stirnseite des Schneckenrades 42 bewegt sich im Gegenuhrzeigersinn 72 bei der Verdrehung der Welle 44. Bei der Verdrehung der Welle 44 läuft der Gleitstein 48 oder eine diesem entsprechende Rolle in der Nut 50. Eine Verdrehung des Schiebestücks 30 wird durch die Verdrehsicherung 32 vermieden. Die Welle 44 ist mit dem Rollwagen 34 verbunden; zwischen einem Bund des Rollwagens 34 und einer Stirnseite des Schiebestücks 30 ist die Feder 38 aufgenommen.

Aus der Darstellung gemäß Figur 5 geht hervor, dass die Klinke 22 in Verriegelungsposition 86 gestellt ist, mithin in eine Zahnlücke 20 zwischen zwei benachbarten Zähnen 18 des Sperrrads 12 eingreift. Zwischen dem Rollkörper 98 des Rollwagens 34 und einer Rampenfläche 100 an der Unterseite der Klinke 22 liegt eine Kontaktzone vor. Mithin wird in der 1-Uhr-Position 80 die Klinke 22 in ihrer Verriegelungsposition 86 arretiert.

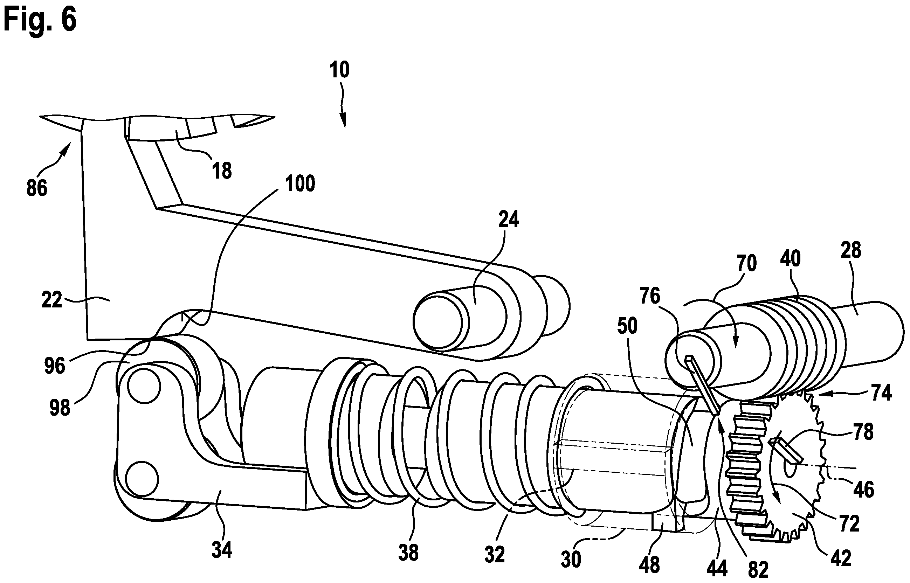

Bei einer Verdrehung der Aktuatorwelle 28 im Uhrzeigersinn 70 von der in Figur 5 dargestellten 1-Uhr-Position 80 in eine in Figur 6 dargestellte 5-Uhr-Position 82 entsprechend der dort dargestellten Position des Zeigers 76 verdreht sich analog das Schneckenrad 42 - dargestellt anhand des Zeigers 78 - im Gegenuhrzeigersinn 72. Das Schiebestück 30 führt eine translatorische Bewegung aus, so dass der Rollwagen 34 entsprechend dem Verlauf der Nut 50 eine translatorische Bewegung in Richtung auf das Schneckenrad 42 ausführt und sich ein abnehmender Kontakt 96 zwischen dem Rollkörper 98 des Rollwagens 34 und der Rampenfläche 100 an der Unterseite der Klinke 22 einstellt. In der in Figur 6 dargestellten 5-Uhr-Position 82 der Aktuatorwelle 28 befindet sich die Klinke 22 noch in der Verriegelungsposition 86, d. h. zwischen zwei Zähnen 18 des Sperrrades.

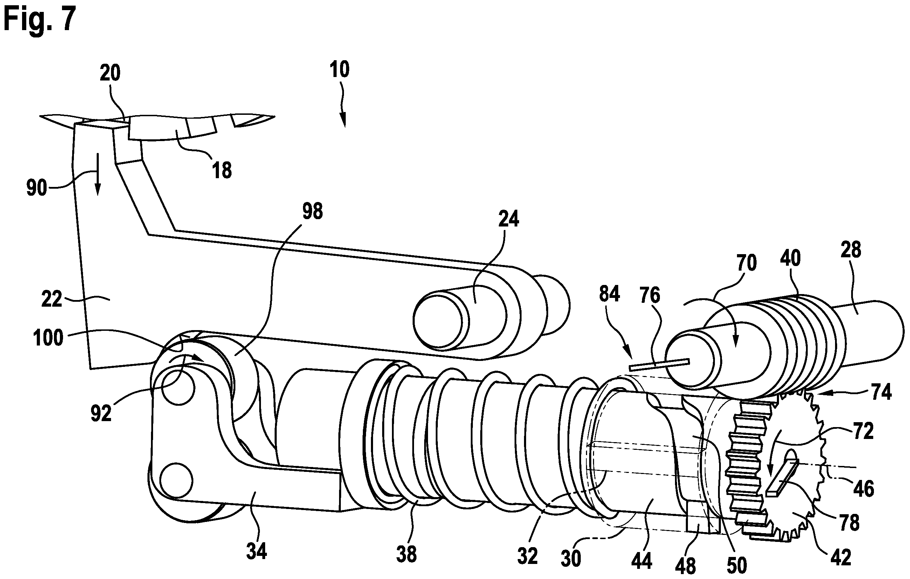

Bei einer weiteren Verdrehung der Aktuatorwelle 28 von der in Figur 6 dargestellten 5-Uhr-Position 82 in die in Figur 7 dargestellte 8-Uhr-Position 84 wird das Schiebestück 30 weiter in Richtung auf das Schneckenrad 42 zubewegt und der Rollwagen 34 fährt entsprechend der Geometrie der Rampenfläche 100 von dieser weg, wodurch sich die um die Klinkenachse 24 bewegbare Klinke 22 in einer Ausfahrrichtung 90 aus der Verzahnungslücke 20 zwischen zwei benachbarten Zähnen 18 des Sperrrads 12 bewegt. Die Freigabebewegung der Klinke 22 erfolgt durch ein Abrollen des Rollkörpers 98 des Rollwagens 34 an der Rampenfläche 100 an der Unterseite der Klinke 22. Demnach erfolgt eine Schwenkbewegung der Klinke 22 um die Klinkenachse 24 bei einem Übergang des Zeigers 76 der Aktuatorwelle 28 von der 5-Uhr-Position 82 in die 8-Uhr-Position 84 gemäß der Darstellung in Figur 7.

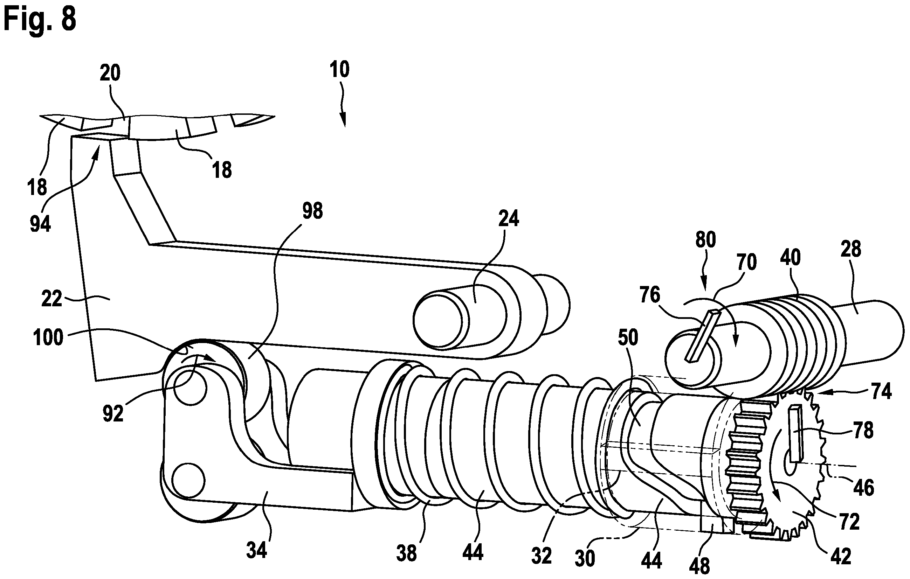

Die vollständige Freigabe des Sperrrads 12 ist in Figur 8 dargestellt. Hier hat der Zeiger 76 der Aktuatorwelle 28 nach einer vollständigen 360°-Umdrehung der Aktuatorwelle 28 seine 1-Uhr-Position 80 erneut erreicht. Das Schiebestück 30, welches an der Umfangsfläche der Welle 44 aufgrund des Vorsehens der Verdrehsicherung 32 translatorisch geführt ist, hat seine maximale Nähe zum Schneckenrad 42 erreicht. Der Rollwagen 34, der mit der Welle 44 gekoppelt ist, ist unter die Klinke 22 gefahren, was der Rundung der Rampenfläche 100 an der Unterseite der Klinke 22, die um die Klinkenachse 24 verschwenkbar ist, geschuldet ist.

Wie aus der Darstellung gemäß Figur 8 hervorgeht, ist die Zahnlücke 20 zwischen den Zähnen 18 des Sperrrads 12 freigegeben (vgl. Freigabeposition 94). Die Parksperre 10 ist in der in Figur 8 dargestellten Freigabeposition 94 deaktiviert, so dass die mit dem Sperrrad 12 der Parksperre 10 drehfest gekoppelte Antriebswelle 14 in beide Drehrichtungen frei rotieren kann.

Bei einem erneuten Ansteuern des Aktuators 26 zur rotatorischen Bewegung der Aktuatorwelle 28 im Uhrzeigersinn 70 wird dieser in dieselbe Drehrichtung weiterbewegt und überführt, entsprechend bei einer weiteren vollständigen 360°-Umdrehung der Aktuatorwelle 28 beziehungsweise von deren Zeiger 76 eine Überführung der Klinke 22 durch eine Schwenkbewegung um die Klinkenachse 24 von der in Figur 8 dargestellten Freigabeposition 94 in die in Figur 5 dargestellte Verriegelungsposition 86, wie vorstehend bereits im Zusammenhang mit Figur 5 beschrieben.

Der schlagende Vorteil der erfindungsgemäß vorgeschlagenen Lösung liegt in der erheblich vereinfachten Ausbildung des Aktuators 26 dahingehend, dass dieser sowohl zum Einlegen der Parksperre 10 als auch zu deren Deaktivierung in dieselbe Richtung angetrieben ist, was eine erheblich einfachere Auslegung des Aktuators 26 ermöglicht, ferner hohe Einlegegeschwindigkeiten der Parksperre 10 sowie schnelle Entriegelungsmöglichkeiten bietet. Des Weiteren können durch die erfindungsgemäß vorgeschlagene Lösung aufgrund der extrem hohen Ein- bzw. Ausrückgeschwindigkeiten in Bezug auf die Klinke 22 kürzeste Schaltzeiten realisiert werden.

Durch die erfindungsgemäß vorgeschlagene Parksperre 10 können die Schnecke 40 beziehungsweise das Schneckenrad 42, angeordnet im 90°-Wellenversatz 74 zueinander, derart ausgelegt werden, dass diese selbsthemmend oder nicht selbsthemmend sind. Für den Fall, dass ein selbsthemmender Schneckentrieb ausgebildet ist, sperrt dieser im Fehlerfall, so zum Beispiel bei Ausfall des elektrischen Aktuators 26, das System. Dies bedeutet, dass die Klinke 22 im Sperrrad 12 verbleibt und das Fahrzeug nicht unkontrolliert wegrollen kann. Voraussetzung dafür ist ein Aktuator 26, der eine Drehbewegung im Uhrzeigersinn und im Gegenuhrzeigersinn, unabhängig von seiner Antriebsrichtung, ausführen kann. Für den Fall, dass die Schnecke 40 und das Schneckenrad 42 so ausgelegt werden, dass sich ein nicht selbsthemmender Schneckentrieb ergibt, wird im Fehlerfall, beispielsweise bei Ausfall des elektrischen Aktuators 26, bedingt durch die Kraft der Feder 38 das ganze System zurückgeschoben, wodurch der Rollwagen 34 zurückgezogen wird und die Klinke 22 das Sperrrad 12 wieder freigibt. In diesem Fall kann das Fahrzeug zumindest wieder bewegt werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Parksperre (10) für Fahrzeuge, wobei die Parksperre (10) ein Sperrrad (12) und eine mit diesem zusammenwirkende Klinke (22) umfasst, die mittels eines Aktuators (26) über eine Aktuatorwelle (28) betätigbar ist, wobei bei Betätigung der Klinke (22) bei Einlegen ihrer Verriegelungsposition (86) und Einlegen ihrer Freigabeposition (94), was einer Freigabe des Sperrrads (12) entspricht, der Aktuator (26) in dieselbe Rotationsrichtung (52) angetrieben wird, und wobei die Aktuatorwelle (28) eine Welle (44) antreibt, die in einem 90°-Versatz (74) zur Aktuatorwelle (28) verläuft und die eine Nut (50) am Umfang der Welle (44) aufweist, in der mindestens ein Gleitstein (48) oder eine Rolle eines Schiebestücks (30) geführt wird, wobei das Schiebestück (30) eine Verdrehsicherung (32) aufweist und sich bei einer rotatorischen Bewegung der Welle (44) in eine Translationsrichtung (54) parallel zur Drehachse (46) der Welle (44) bewegt und das Schiebestück (30) wirkverbunden mit der Klinke (22) ist, **dadurch gekennzeichnet, dass** sich die Nut (50) in der Welle (44) mäander- oder gewindegangförmig in einem Umfangswinkel von 720°, zwei vollständigen Umdrehungen der Welle (44) entsprechend, erstreckt.

2. Parksperre (10) gemäß Anspruch 1, **dadurch gekennzeichnet, dass** die Parksperre (10) einen mit der Welle (44) verbundenen Rollwagen (34) aufweist, der in einer Führung (36) geführt ist und mindestens einen Rollenkörper (98) aufweist.

3. Parksperre (10) gemäß einem der Ansprüche 1 oder 2, **dadurch gekennzeichnet, dass** die Klinke (22) um eine Klinkenachse (24) verschwenkbar ist.

4. Parksperre (10) gemäß Anspruch 2 oder gemäß Anspruch 3 in Verbindung mit Anspruch 2, **dadurch gekennzeichnet, dass** die Klinke (22) eine Rampenfläche (100) aufweist, die auf dem mindestens einen Rollkörper (98) des Rollwagens (34) aufliegt.

5. Parksperre (10) gemäß Anspruch 2 oder gemäß Anspruch 4 oder gemäß Anspruch 3 in Verbindung mit Anspruch 2, **dadurch gekennzeichnet, dass** zwischen dem Rollwagen (34) und dem Schiebestück (30) eine die Welle (44) umgebende Feder (38) aufgenommen ist.

6. Parksperre (10) gemäß einem der Ansprüche 1 bis 5, **dadurch gekennzeichnet, dass** die Aktuatorwelle (28) eine Schnecke (40) aufweist, die mit einem Schneckenrad (42) der Welle (44) kämmt.

7. E-Achsen-Modul eines elektrisch angetriebenen Fahrzeugs mit einer Parksperre (10) gemäß einem der vorhergehenden Ansprüche.

## Claims

1. Parking lock (10) for vehicles, wherein the parking lock (10) comprises a locking wheel (12) and a pawl (22) which interacts with it, which can be actuated by means of an actuator (26) via an actuator shaft (28), wherein, when the pawl (22) is actuated, when its locking position (86) is engaged and its release position (94) is engaged, corresponding to a release of the locking wheel (12), the actuator (26) is driven in the same direction of rotation (52), and wherein the actuator shaft (28) drives a shaft (44) which runs at a 90° offset (74) to the actuator shaft (28) and which has a groove (50) on the circumference of the shaft (44), in which at least one sliding block (48) or a roller of a sliding piece (30) is guided, wherein the sliding piece (30) has a torsion protection means (32) and moves in a rotational movement of the shaft (44) in a translational direction (54) parallel to the rotational axis (46) of the shaft (44) and the sliding piece (30) is operatively connected to the pawl (22), **characterized in that** the groove (50) in the shaft (44) extends in a meander or thread turn form at a circumferential angle of 720°, corresponding to two complete revolutions of the shaft (44).

2. Parking lock (10) according to Claim 1, **characterized in that** the parking lock (10) has a roller carriage (34) which is connected to the shaft (44), is guided in a guide (36) and has at least one rolling body (98).

3. Parking lock (10) according to either of Claims 1 and 2, **characterized in that** the pawl (22) is pivotable around a pawl axis (24).

4. Parking lock (10) according to Claim 2 or according to Claim 3 in conjunction with Claim 2, **characterized in that** the pawl (22) has a ramp surface (100) which rests on the at least one roller body (98) of the roller carriage (34).

5. Parking lock (10) according to Claim 2 or according to Claim 4 or according to Claim 3 in conjunction with Claim 2, **characterized in that** a spring (38) surrounding the shaft (44) is received between the roller carriage (34) and the sliding piece (30).

6. Parking lock (10) according to one of Claims 1 to 5, **characterized in that** the actuator shaft (28) has a worm (40) which meshes with a worm gear (42) of the shaft (44).

7. E-axle module of an electrically driven vehicle with a parking lock (10) according to one of the preceding claims.

## Revendications

1. Blocage de stationnement (10) pour véhicules, le blocage de stationnement (10) comprenant une roue à rochet (12) et un cliquet (22) coopérant avec celle-ci, lequel peut être actionné au moyen d'un actionneur (26) par le biais d'un arbre d'actionneur (28), lors de l'actionnement du cliquet (22) pour l'engagement de sa position de verrouillage (86) et l'engagement de sa position de libération (94), ce qui correspond à une libération de la roue à rochet (12), l'actionneur (26) étant entraîné dans le même sens de rotation (52), et l'arbre d'actionneur (28) entraînant un arbre (44) qui suit un tracé avec un décalage de 90° (74) par rapport à l'arbre d'actionneur (28) et qui possède une rainure (50) sur la périphérie de l'arbre (44), dans laquelle est guidé au moins un coulisseau (48) ou un galet d'une pièce coulissante (30), la pièce coulissante (30) possédant un dispositif anti-torsion (32) et, lors d'un mouvement de rotation de l'arbre (44), se déplaçant dans une direction de translation (54) parallèle à l'axe de rotation (46) de l'arbre (44) et la pièce coulissante (30) étant en liaison active avec le cliquet (22), **caractérisé en ce que** la rainure (50) dans l'arbre (44) s'étend en forme de méandres ou de filets selon un angle circonférentiel de 720° correspondant à deux tours complets de l'arbre (44).

2. Blocage de stationnement (10) selon la revendication 1, **caractérisé en ce que** le blocage de stationnement (10) possède un chariot roulant (34) relié à l'arbre (44), lequel est guidé dans un guide (36) et possède au moins un corps de roulement (98).

3. Blocage de stationnement (10) selon l'une des revendications 1 ou 2, **caractérisé en ce que** le cliquet (22) peut pivoter autour d'un axe de cliquet (24).

4. Blocage de stationnement (10) selon la revendication 2 ou selon la revendication 3 en relation avec la revendication 2, **caractérisé en ce que** le cliquet (22) présente une surface de rampe (100) qui repose sur l'au moins un corps de roulement (98) du chariot roulant (34).

5. Blocage de stationnement (10) selon la revendication 2 ou selon la revendication 4 ou selon la revendication 3 en relation avec la revendication 2, **caractérisé en ce qu'**un ressort (38) qui entoure l'arbre (44) est reçu entre le chariot roulant (34) et la pièce coulissante (30).

6. Blocage de stationnement (10) selon l'une des revendications 1 à 5, **caractérisé en ce que** l'arbre d'actionneur (28) possède une vis sans fin (40) qui s'engrène avec une roue à vis sans fin (42) de l'arbre (44).

7. Module d'essieu électrique d'un véhicule à propulsion électrique comprenant un blocage de stationnement (10) selon l'une des revendications précédentes.
